# EUROPEAN PATENT APPLICATION

(11) **EP 4 837 979 A1**
(43) Date of publication of application: **11.11.2026**
(21) Application number: 25193616.7
(22) Date of filing: 04.08.2025
(51) Int. Cl.: C21B 7/20, F27B 1/10, F27B 1/20, F27D 99/00, F16J 15/34, F16J 15/40, F16J 15/447

(54) **IMPROVED BLAST FURNACE DISTRIBUTING DEVICE WITH A NITROGEN SEALING STRUCTURE**

(30) Priority: 09.05.2025 EP 25175215
(71) Applicant: CISDI Research & Development Co., Ltd, Sheffield S4 7YA (GB)
(72) Inventor: Ma, Yunfeng, Chongqing 401122 (CN); Wang, Shusheng, Chongqing 401122 (CN); Zheng, Jun, Chongqing 401122 (CN); Dai, Wenjun, Chongqing 401122 (CN)
(74) Representative: Chung, Hoi Kan

(57) **Abstract**

The present invention relates to a modified blast furnace distributor, which belongs to the field of blast furnaces. The nitrogen sealing structure is divided into two functional regions in the overall structure. Among them, the lower position of the blast furnace is implemented a labyrinth structure which can serve both as a dust prevention and dust reduction measure while also increasing the resistance to gas pressure within the furnace, providing favorable conditions for an upper floating ring seal. The matching floating ring is set on the upper position of the distributor. They can maintain contact adaptively, through mutual run-ins to achieve a closer union. Such a structure does not require high-precision manufacturing costs. Maintaining the upper pressure above the blast furnace pressure can ensure that the floating ring has a certain sealing pressure force which can achieve a better sealing effect.

## Description

### Technical field

The invention belongs to the technical field of blast furnaces and relates to an improved blast furnace distributing device with a nitrogen-sealing structure.

### Background technology

Blast furnace with no clock top cloth has nearly 50 years of history, and has developed a variety of transmission structure forms, such as the most traditional Luxembourg PW company cloth in domestic often called "water cooled gear box" or "air box", the other domestic MCC, east, Qin Ye, China metallurgical south have their own characteristics of cloth. The common feature of these distributors is that there is a rotary cylinder structure. The seals of the rotary cylinder and the fixed part of the distributor are sealed with nitrogen gas, and the water cooling structure has two forms: open and closed type. Closed water cooling is also known as "closed water circulation system" or "pressurized water cooling system". No matter what kind of water circulation system, the corresponding nitrogen seal structure methods are commonly used in the rotating cylinder and fabric shell parts with a certain gap, through the cloth shell into higher than the blast furnace chamber nitrogen for the so-called "nitrogen seal", because the blast furnace chamber is a high temperature, high pressure dust environment, and often unstable pressure in the furnace, dust and gas easily into the cloth cavity through the gap.

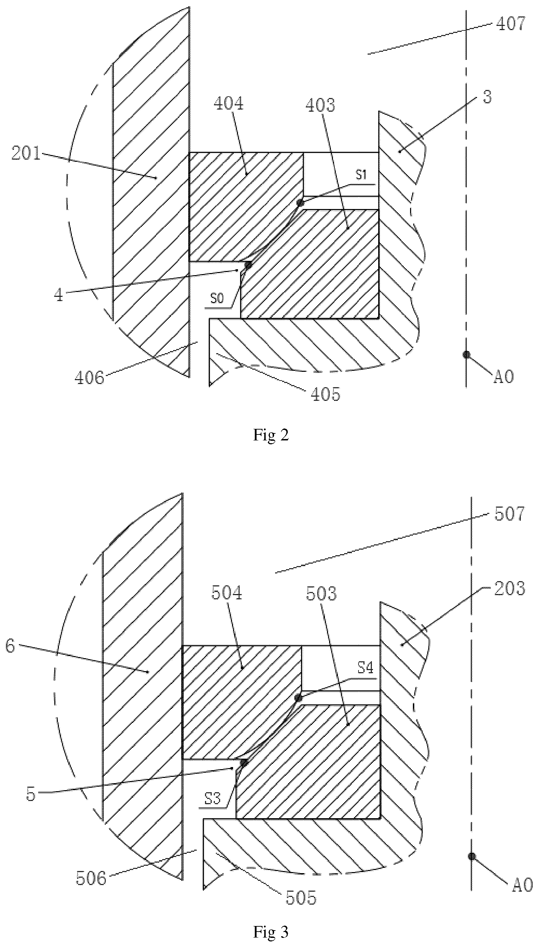

Chinese literature "Research on the box of blast furnace" (master thesis of Northeastern University) 1.3.4.2 The traditional air seal structure is well summarized and described, Such a structure can only use the labyrinth structure with large gaps in the binding site of the rotating cylinder and the fixed shell. If the gap is narrowed, there must be a high precision processing of the mutual contact surface. It is also jammed due to thermal deformation during the operation. However, the larger gap is that the blast furnace chamber and the distributor chamber are macroscopic connections. It is easy to cross each other. In order to protect the components of the distributor chamber from high temperature gas erosion in the blast furnace chamber, large amounts of nitrogen must be supplied into the distributor inner chamber, as indicated in 1.3.4.3, this gas seal structure often consumes several thousand cubic meters per hour. This paper also points out an improved air sealing method: in the binding site of the rotating cylinder and the fixed shell, the graphite block is placed and the pressure ring is set above, as shown in figure 2.3, the graphite block is rotated together with the rotating cylinder and the pressure plate, the graphite block is attached to the fixed binding surface through the plane, this way to the relevant coordination surface dimensional processing requirements are higher while consuming it with wear and attrition, the gap will gradually increase; below the graphite block is directly against the blast furnace gas and dust, once the pressure fluctuation causes the pressure inside the cloth chamber, blast furnace gas is easy to break through the gap and wear the graphite block with dust, such a structure works better in the initial use, but the effect of long-term use may gradually become worse.

China Patent 201120161414.4 and China Patent 201220013144.7 both use a narrow seam labyrinth in the joint part of the rotating cylinder and the fixed shell, but theoretically, there is still a leakage risk. China patent 200820077191.1 adopts the wear-resistant sealing ring structure (similar to floating ring) similar to the study of blast furnace, overcome the floating ring structure in the top of blast furnace, and the elastic element is connected to the damage, if the whole fabric needs to replace the elastic element, it is difficult to maintain. The first annular part and the second annular part described in Chinese patent 201580027776.5 contact with each other, theoretically can improve the sealing effect, because the first annular part and the second annular part are fixed connected with the fixed shell and the rotating part, respectively, similar to the traditional version of the gap (and to the limit of contact state), as mentioned above, such a structure is very high requirement for machining accuracy, and the high temperature deformation in operation is unavoidable.

### Invention content

In view of this, the object of the present invention is to provide a furnace distributor of nitrogen sealing structure, which, on the basis of reducing the manufacturing difficulty, can float the adaptive seal in operation, not only prolonging its service life but also reduce the effect of nitrogen consumption of the distributor.

To achieve the above purpose, the present invention provides the following technical solutions:
a type of nitrogen sealing structure, including a fixed shell, a rotary cylinder and a central throat tube, the rotary cylinder is mounted on the top of the fixed shell, and the rotary cylinder is mainly composed of the inner ring cylinder and the upper ring hole of the inner ring housing, and the inner ring cylinder. The inner ring cylinder is arranged at the upper-end surface of the cylinder bottom plate and located on the outer ring side of the cylinder bottom plate;
an annular air duct I is formed between the inner ring cylinder and the intermediate fixing cylinder; the outer peripheral surface of the intermediate fixing cylinder is provided with a shaft shoulder I and an annular gap I is formed between the outer peripheral surface of the shaft shoulder I and the inner ring cylinder; the shaft shoulder I acts as an intermediate partition ring, dividing the annular air duct I into an upper air duct I and a lower air duct I which are interconnected through the annular gap I;
a lower intermediate floating ring is sleeved above the shaft shoulder I, and an upper intermediate floating right is freely placed on top of the lower intermediate floating ring; the lower intermediate floating ring is provided with a lower mating surface I, while the upper intermediate floating ring correspondingly has an upper mating surface I that engages with the lower mating surface I; one of the mating surfaces I is a spherical surface with an R5mm radius, while the other is a conical surface with a 30° inclination angle, allowing the two mating surfaces I to form a line contact;
the lower air duct I under the shaft shoulder I is provided with an intermediate labyrinth ring;
a fixed short pipe is provided beneath the fixed shell, forming an annular air duct II between the outer ring cylinder placed inside the fixed short pipe and the fixed short pipe;
the outer peripheral surface of the outer ring cylinder is provided with a shaft shoulder II, and an annular gap II exists between the outer peripheral surface of the shaft shoulder II and the fixed short pipe; the shaft shoulder II serves as an outer partition ring to divide the annular air duct II into an upper air duct II and a lower air duct II, which are connected through the annular gap II;
an outer lower floating ring is sleeved above the shaft shoulder II, and an outer upper floating right is freely placed on top of the outer lower floating ring; the outer lower floating ring is provided with a lower mating surface II, while the outer upper floating ring correspondingly has an upper mating surface II that engages with the lower mating surface II; one of the mating surfaces II is a spherical surface with an R5mm radius, while the other is a conical surface with a 30° inclination angle, allowing the two mating surfaces II to form a line contact;
the lower air duct II under the shaft shoulder II is provided with an outer labyrinth ring;
both the intermediate labyrinth ring and the outer labyrinth ring are configured as paired corrugated tubes and the tooth-shaped corrugation of the corrugated tubes is an asymmetrical corrugated structure, formed by increasing the wave crest arc radius R1 by 10% while decreasing the wave root arc radius R2 by 5%.

Further, the intermediate fixing cylinder is fastened to the rotary support or central throat or fixing shell through the connector.

Further, in the annular air duct I, the ring of the upper gas I is wider than the lower gas I, and the ring of the lower gas I is wider than the ring gap I, the upper gas loop is wider than the lower gas loop, and the lower gas loop is wider than the annular gap.

Further, a thermal expansion gap of 0.5 to 1 mm is reserved between the wave crest and wave root of the bellows of the middle labyrinth ring and the outer labyrinth ring.

Further, the corrugated pipe inner wall of the outer labyrinth ring was coated with Al ₂ O ₃ -TiC ceramic coating.

Further, 4~6 nozzles are evenly arranged in the bottom circumference of the intermediate fixing cylinder, the injection direction is aligned with the ripple gap of the middle labyrinth ring, the inner wall of the fixed short pipe is uniformly arranged with 4~6 nozzles, the injection direction is aligned with the ripple gap of the outer labyrinth ring; the nozzle is electrically connected with the solenoid valve controlling the nitrogen injection and the timer.

Further, an elastic pad is added between the lower intermediate floating ring and the shaft shoulder I and between the outer ring and the shaft shoulder, which is a metal corrugated pad.

Further, an intermediate air duct supply pipe is connected to the annular air duct I to provide blowing pressure to the intermediate upper floating ring; a gap is left between the fixed short pipe and a cylinder bottom plate, allowing the upper air duct II within the annular air duct II to communicate with the inner chamber of the distributor; the inner chamber of the distributor is connected to a distributor inner chamber supply pipe.

Further, the lower intermediate floating ring and the outer upper floating ring embedded high temperature resistant permanent magnet, and with the electromagnetic coil set on the fixed shell and pressure sensing and control system to monitor the blast furnace pressure and trigger the electromagnetic coil power, and power supply and circuit module to provide the pulse current and control the magnetic force direction.

Further, the inner chamber supply pipe P0 and the intermediate air duct supply pipe P1 are supplied by parallel gas sources.

The beneficial effect of the present invention lies in that:
1) The nitrogen sealing structure in this scheme increases the number of labyrinths at the inner chamber end of the blast furnace, enhances the dust removal and resistance effect, and forms the first barrier for sealing the inner chamber of the distributor; meanwhile, the elasticity of the corrugated structure is also convenient for installation.
2) The upper and lower floating loop contact structure is adopted to have an adaptive function, and its contact position always keeps contact. Then the fluid dynamic pressure effect is used to form nitrogen film in the contact surface, reduce friction and enhance the impact resistance. In addition, elastic spacers (such as a metal corrugated pad) are added to the axial contact surface of the lower intermediate floating ring and the outer lower floating ring (such as shaft shoulder I and shaft shoulder II), which allows the floating ring to adjust the position in the radial thermal expansion to avoid jamming.
3) A thermal expansion gap is reserved between the top and root of the bellows of the labyrinth ring to avoid high temperature occlusion.
4) The permanent magnet is embedded in the upper floating ring in the middle and the outer upper floating ring, and coordinates with the fixed shell or the electromagnetic coil on the intermediate fixing cylinder. When the blast furnace pressure surge is detected, the brief power on generates the reverse magnetic force, which can assist the gravity to quickly reset the floating ring.
5) Adopt a parallel air supply with double gas sources, and install a piezoelectric pressure sensor, which can adjust the nitrogen flow in real time, and effectively control / maintain the pressure fluctuation range.

Other advantages, objectives and features of the invention will be elaborated in the subsequent specification and, to the extent, will be obvious to the person skilled in the field, or may be taught from the practice of the invention. The objectives and other advantages of the present invention can be realized and obtained by the instructions below.

### Description of the Drawings

In order to clarify the objectives, technical schemes and advantages of the invention, a detailed description of the invention is preferred in combination with the drawings, wherein:
Fig.1 is the structural schematic diagram of this scheme;
Fig.2 is the enlarged view of part A of Fig. 1;
Fig.3 shows the enlarged view of section B of Fig. 1;
Fig.4 is a schematic diagram of a floating ring structure;
Fig.5 shows a schematic diagram of the sectional structure form of the floating ring.

Reference numerals in the drawings: Blast furnace chamber C0, distributor chamber C1, annular air duct I C2, annular air duct II C3, snake channel C4, snake channel C5, lower mating surface I S0, upper mating surface I S1, lower mating surface II S3, upper mating surface II S4, distributor chamber supply pipe P0, intermediate air duct supply pipe P1, blast furnace central axis A0;

Distribution body 1, rotary tube 2, intermediate fixing cylinder 3, seal structure I 4, seal structure II 5, fixed short pipe 6, blast furnace 7; fixed shell 101, rotary support 102, central tube 103; inner ring cylinder 201, cylinder bottom plate 202, outer ring cylinder 203;

In sealing structure I: intermediate labyrinth ring 401, intermediate labyrinth ring 402, lower intermediate floating ring 403, upper intermediate floating ring 404, shaft shoulder I 405, annular gap I 406, upper air duct I 407, lower air duct I 408, lower floating ring wear-resistant layer 409, upper floating ring wear-resistant layer 410;

In the seal structure II: outer ring labyrinth ring 501, outer ring labyrinth ring 502, outer lower floating ring 503, outer upper floating ring 504, shaft shoulder II 505, annular gap II 506, upper air duct II 507, lower air duct II 508.

### Embodiments

With the embodiment of the invention described below through specific examples, those skilled in the art can easily understand the other advantages and benefits of the invention by the contents disclosed in the specification. The invention may be implemented or applied through different specific embodiments, and the details in the specification can be modified or changed based on different views and applications without departing from the spirit of the invention. It should be noted that the illustration provided in the following embodiments only schematically the basic idea of the invention, and the features in the following embodiments can be combined.

Among them, the drawings are only used for example illustration, which is only a schematic diagram, not a physical diagram, and cannot be understood as a limitation on the invention of the invention; to better illustrate the embodiment of the invention, some parts of the drawings may be omitted, enlarged or reduced and do not represent the size of the actual product; some known structures in the art may be omitted.

The same or similar labels in the drawings of the embodiment of the invention correspond to the same or similar components; In the description of the present invention, It needs to be understood that, If the orientation or position relationship indicated by the terms "up", "down", "left", "right", "front", "back" is based on the orientation or position relationship shown in the accompanying drawings, Only to facilitate the description of the present invention and to simplify the description, Rather than indicating or implying that the device or element must have a specific orientation, be constructed and operate in a specific orientation, So the language in the accompanying diagram is only for exemplary illustration, Could not be understood as a limitation on the present invention, For ordinary technicians in the field, The specific meaning of the above terms can be understood according to the specific circumstances.

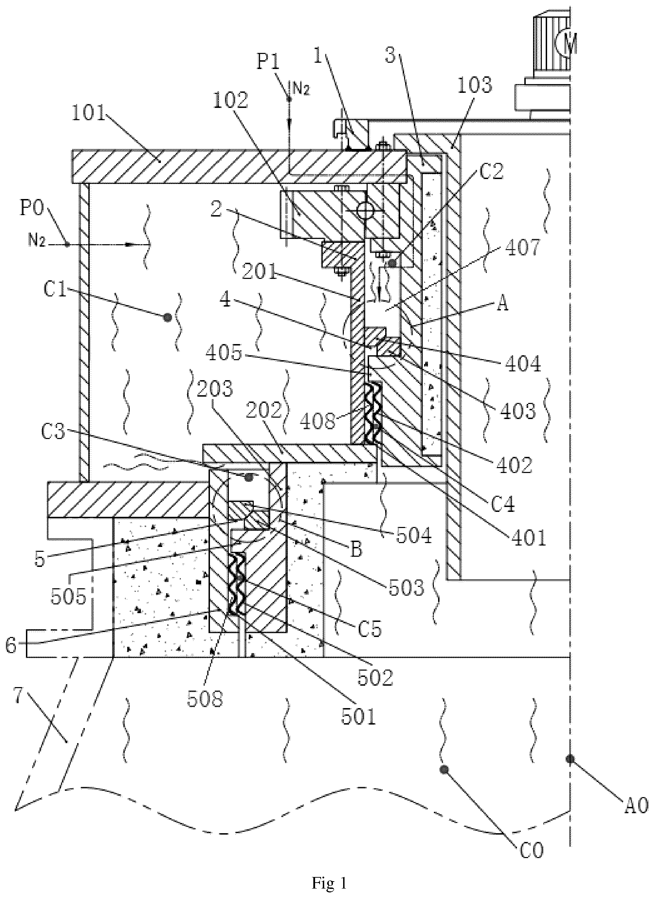

As shown in Figure 1, it is a blast furnace distributor with an improved nitrogen sealing structure. Priority is: the distributor body 1 and its transmission structure is the existing conventional structure, which is composed of fixed shell 101, rotating tube 2, the central tube 103, rotary support 102 and other parts, the water cooling technology applicable to the distributor body 1 (including the so-called "closed water circulation system" and "open water circulation system") is also known technical means, so is not detailed in this scheme. Secondly, it should be noted that the improvement of the nitrogen sealing structure in this scheme can be applied to these existing blast furnace fabrics.

The improvement method of the nitrogen sealing structure is detailed in combination with the drawings in the specification.

The nitrogen sealing structure of the furnace includes the basic composition of the fixed shell 101, the rotating cylinder 2 and the central tube 103, where the rotating cylinder 2 is mounted above the interior of the fixed shell 101 by the rotary support 102 and drives the rotation around the rotary center (the upper part of the central pipe 103 is connected with the central ring hole position above the fixed shell 101. The rotating cylinder 2 here is mainly composed of the inner ring cylinder 201, the bottom plate 202 and the outer ring cylinder 203, wherein the bottom plate 202 is a circular disk, and the cylindrical inner ring cylinder 201 is arranged at the upper end surface of the bottom plate 202 and located on the inner ring side of the bottom plate 202, and the cylindrical outer ring cylinder 203 is arranged at the lower end surface of the bottom plate 202 and on the outer ring side of the bottom plate. It should be noted that the aforementioned inner ring side is the side of the bottom plate 202 near the center tube 103, and the outer ring side of the bottom plate 202 is away from the center tube 103.

In this scheme, the same sealing structure is adopted for the inner ring cylinder 201 and the outer ring cylinder 203, which is the main improvement point of this scheme.

In the annular segment corresponding to the inner ring cylinder 201, the inner ring cylinder 203 and the inner ring tube 201. The intermediate fixing tube 3 is an independently arranged component. Since the inner ring of the swivel support 102, the central tube 103 and the fixed shell 101 are all parts, it can be fastened on the inner ring of the swivel support 102, the central tube 103 or the fixed shell 101, which is not only convenient for processing and installation, but also conducive to the replacement and maintenance of the worn parts.

The annular air duct I C2 is formed between the inner ring cylinder 201 and the intermediate fixing cylinder 3, the outer peripheral surface of the intermediate fixing cylinder 3 is provided with the shaft shoulder I 405, and the shaft shoulder I 405 and the inner ring cylinder 201 have an annular gap I 406. The shaft shoulder I 405 serves as an annular ring to divide the upper air duct I 407 and lower air duct I 408, and the upper air duct I 407 is connected with the lower air duct I 408 through the annular gap I 406.

Above the shaft shoulder I 405 of the intermediate fixing cylinder 3 has the lower intermediate floating ring 403, the lower intermediate floating ring 403 has the middle floating ring 404, the lower intermediate floating ring 403 has the lower coordination surface IS 0, the middle floating ring 404 has the upper mating surface I S1 with the lower mating surface I S0, the upper mating surface I S1 and I S0 of the lower mating surface, one is spherical surface, one is a cone surface to make the upper and lower mating surface forming line contact. The middle labyrinth rings 401 and 402 are provided in the lower air duct I 408 below the shaft shoulder I 405.

The lower intermediate floating ring 403 and the upper intermediate floating ring 404 have degrees of freedom of axial and circumferential motion; this ensures their ability to adapt to the manufacturing error and find their best working position.

The shaft shoulder I405, the lower intermediate floating ring 403, the upper intermediate floating ring 404 and the intermediate labyrinth ring 401 and 402 together constitute the seal structure I 4 of the region segment corresponding to the inner ring cylinder 201. As interval ring shaft shoulder I 405 is with the intermediate fixing cylinder 3, its diameter is larger than the intermediate fixing cylinder 3, can be welded on the intermediate fixing cylinder 3, also can be directly designed with the intermediate fixing cylinder 3 integrated structure, namely the machining method to remove excess part, the intermediate fixing cylinder 3 formed a radially convex ladder structure and the annular air duct IC2 is divided into upper and lower parts.

The intermediate labyrinth ring 401 is welded to the lower part of the inner ring cylinder 201 of the rotating cylinder 2, the intermediate labyrinth ring 402 is welded to the lower part of the intermediate fixing cylinder 3, the intermediate labyrinth ring 401 and the intermediate labyrinth ring 402 are composed of paired bellows, the peaks and valleys of the two bellows are corresponding settings, and the two corresponding bellows form a serpentine channel C4 when working.

The bellows in this scheme is improved on the basis of the traditional "symmetrical bellows". The traditional "symmetrical bellows" means that the corrugated tooth is symmetric design, that is, the radius of the top arc R1 is equal to the radius of the root arc R2, and the geometry of the crest and the trough is completely symmetrical. The corrugated tooth shape of the two bellows applied here is asymmetric design, that is, the asymmetric corrugated structure formed after the radius of the top arc R1 is increased by 10% and the radius of the root arc R2 is reduced by 5%. In this way, the gap between the crest (crest) and the trough (root) still maintains the design value in the cold state, but the thermal expansion reduces the arc radius of the crest and the contact probability between the crest and the trough. In addition, when the asymmetric structure is heated, the top of the tooth is more likely to expand to the outside (away from the center of rotation) due to the increase of radius, while the root has less deformation resistance to the inside (near the center of rotation) due to the decreased radius, thus guiding the thermal deformation to the direction of low resistance. That is, preferentially deformation to the low resistance direction during thermal expansion. In addition, when the asymmetric ripple makes the gas pass through the labyrinth, a larger vortex area is formed on the gentle side of the crest, which can increase the local turbulent kinetic energy dissipation and improve the resistance effect. According to the CFD simulation, the pressure drop of the asymmetric ripple is 8%~12% higher than that of the symmetric structure.

In addition, a thermal expansion gap of 0.5-1mm is reserved at the top and the root of the bellows of the intermediate labyrinth ring 402, that is, the minimum distance between the crest (the top) of the bellows and the trough (the root) of the other bellows is 0.5~1mm. The reserved gap provides redundant space for thermal expansion. When the high temperature expansion and the rotating part and the fixed part are relatively displaced, the gap can be avoided due to thermal expansion.

Although the serpentine channel C4 of the bellows labyrinth (intermediate labyrinth ring 401 / 402) can increase the resistance damage, the dust may accumulate in the ripple gap after long-term operation, reducing the efficiency of the labyrinth. In order to improve the self-cleaning ability of the labyrinth, on one hand, Al ₂ O ₃ -TiC ceramic coating is sprayed on the intermediate labyrinth ring 401 and 402 to reduce the dust attachment rate; on the other hand, this scheme also combines with airflow erosion design. The airflow erosion design here is the pulse nitrogen back blowing system. By timing and directional injection of high pressure nitrogen, it removes the ash in the gap of the labyrinth ring bellows, and prevents dust accumulation and the decrease of seal efficiency.

Specifically, 4~6 nozzles are evenly arranged at the bottom circumference of the intermediate fixing cylinder 3, the injection direction is aligned at the ripple gap of the intermediate labyrinth ring 401/402, the solenoid valve and timer are set to control the nitrogen injection, regularly spray nitrogen and detect the pressure difference before and after the pressure of the labyrinth through the pressure difference sensor. If the pressure difference is raised to the set value, the reverse is triggered. The control unit is the output signal of PLC or special controller, driving the solenoid valve on / off. This design uses directional high-pressure pulse nitrogen to effectively remove the dust of the labyrinth structure, while combines reliability and maintenance convenience through modular design. The jet parameters can be adjusted according to the actual working conditions to optimize the performance.

The lower intermediate floating ring 403 is arranged on the outer cylindrical surface of the intermediate fixing cylinder 3 and the axial limit is realized by the upper surface of the shaft shoulder I 405. The lower surface of the lower intermediate floating ring 403 and the lower intermediate floating ring 403 can be a metal corrugated cushion, allowing the middle and lower floating ring 403 to adjust the position during radial thermal expansion to avoid jamming. As shown in FIG. 2, the upper left corner of the lower intermediate floating ring 403 is the lower mating surface I S0 with a slope; the tilt angle is 30°, corresponding to the upper mating surface I S1 is set to R5mm. When the 30° inclined cone surface and R5mm of the spherical surface, the fluid pressure effect reduces friction and enhances impact resistance, thus forming a double seal of line contact + microgas film, reducing the nitrogen consumption by 15% to 20%. The upper intermediate floating ring 404 is supported by the lower floating ring contact surface S0 to limit its axial movement; the upper intermediate floating ring 404 and the inner cylindrical surface of the inner cylinder 201 are gap coordinated.

Similarly, below the fixing housing 101 is provided with a fixed short pipe 6, and an annular air duct II C3 is formed between the outer ring cylinder 203 and the fixing short tube 6.

The outer ring cylinder 203 is provided with a shaft shoulder II 505 between the outer ring shoulder 505 and the fixed shoulder 505 has an annular gap II 506 separating the annular air duct II C3 into the upper air duct II 507 and the lower air duct II 508, and the upper air duct II 507 is connected to the lower air duct II 508 through the annular gap II 506.

The shaft shoulder 503 of the outer ring cylinder 203 is mounted above the outer ring 503, the floating ring 503 has the upper floating ring 503 on the outer ring, the lower mating surface II S3, the upper mating surface II S4 on the lower mating surface II S3, the upper mating surface II S4 and the lower mating surface II S3, one is a spherical surface and one is a cone surface to contact the upper and lower mating surfaces. The outer circle labyrinth rings 501 and 502 are provided in the lower air duct II 508 below the shaft shoulder II 505.

The seal structure II 5 at the corresponding section of the outer ring cylinder 203 is the same as the seal structure I4, which is composed of the shaft shoulder II 505, the lower floating ring 503, the floating ring 504 on the outer ring, and the outer ring labyrinth rings 501 and 502. The fixed short pipe 6 is welded to the lower flange position of the fixed shell 101, and the outer cylinder 203 of the rotating cylinder 2 is welded or bolted to the lower surface of the bottom plate 202; the shaft shoulder II 505 as the outer ring is connected to the outer ring cylinder 203 with a diameter larger than the outer cylinder 203, and may be welded or integrated with the outer ring cylinder 203. In this way, the outer ring cylinder 203 forms a radially protruding step structure and divides the annular air duct II C3 into two upper and lower parts; as shown in FIGS. 1 and 3, the remaining part of the sealing structure 5 is similar to the sealing structure I4, i. e., an elastic spacer is added between the floating ring 503 and the shaft shoulder II 505, using the same asymmetric corrugated structure, spraying the Al ₂ O ₃ -TiC ceramic coating on the inner wall of the corrugated pipe, and setting a pulse nitrogen blowback system.

Preferably, in the annular air duct I C2, the upper air duct I 407 is wider than the lower air duct I 408, and the lower air duct I 408 is wider than the annular gap I 406; in the annular air duct II C3, the upper air duct II 507 is wider than the lower air duct II 508, and the lower air duct II 508 is wider than the ring width of the annular gap 506.

As a further optimization of the above scheme, the I S1 of the upper and the lower I S0, the upper and S4 and the lower are S3. Set the contact surface of the floating ring as the wear-resistant material, or insert the wear-resistant layer in the local position of the contact surface, or use the whole or part of the wear-resistant material, which can greatly extend the service life of the floating ring. The graphite material specially proposed here is a preferred scheme, and other materials such as ceramic materials are also allowed. In the selection of materials, in addition to the convenience of manufacturing and processing needs to be considered, the material should also have the characteristics of high temperature tolerance and small thermal deformation.

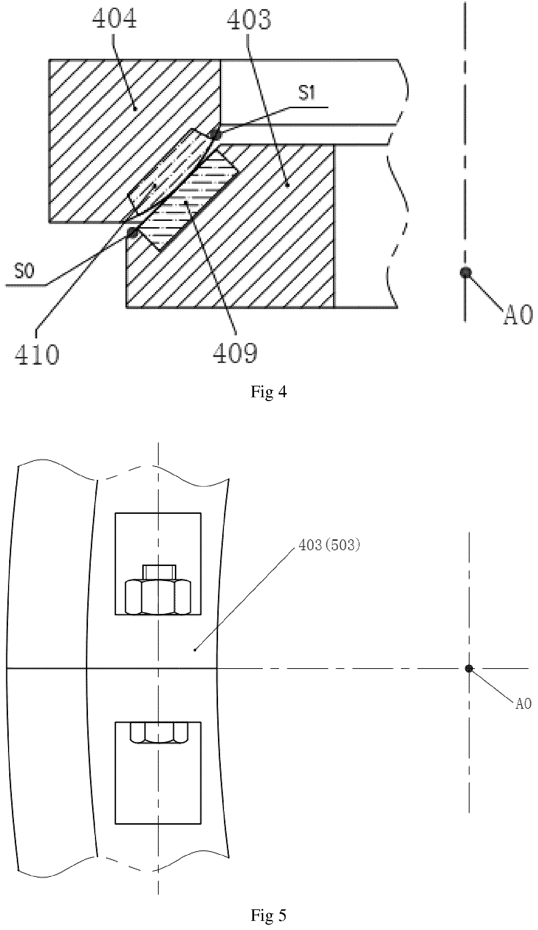

The shown in FIG. 4 is a floating ring structure in which the floating ring wear layer 403 is embedded near the upper contact line of the lower ring surface 409, which may be made of processing a ring groove on the lower mating surface I S0 and then welding a hard alloy. Similarly, on the upper mating surface of the middle floating ring 404, the IS 1, the upper floating ring wear layer 410.

In this application scenario, the characteristics of graphite, including high temperature resistance, wear resistance, self-lubrication and easy machining, can be fully utilized. Ceramic materials are also an excellent alternative material, in the application of ceramic fragile characteristics need to be considered. With the development of future material technology, other materials that meet high temperature and wear resistance can be used as alternative materials for up and down floating rings.

Due to the traditional gravity reset, the permanent magnet fitted with the electromagnetic coil on the fixed shell 101 and the intermediate fixed cylinder 3, including a pressure sensing and control system to monitor the blast furnace pressure in real time and trigger the electrification of the electromagnetic coil, and the power supply and circuit module to provide the pulse current and control the direction of the magnetic force. When the blast furnace pressure surge is detected, the brief electrification generates the reverse magnetic force, assisting the gravity to quickly reset the floating ring.

In this scheme, the permanent magnet is preferably a samarium cobalt (SmCo) magnet, processed through the non-contact surface (such as the inner ring 504 in the outer ring, embedded in the permanent magnet and fixed with the high temperature adhesive (such as Ceramabond 571). The middle floating ring 404 corresponding to the coil is installed on the outer peripheral surface of the middle fixing cylinder 3, and 6 sets of coils are uniformly arranged along the circumference. The floating ring 504 on the outer ring is mounted on the inner wall of the fixed shell 101, aligned with the permanent magnet position of the floating ring 504 on the outer ring. The coil is best embedded in the stainless steel protective shell, fixed on the shell/fixing cylinder by bolts, and the radial gap between the coil is 2~3 mm with the permanent magnet. The sensor selects a piezoelectric pressure sensor, installed at the interface between the blast furnace chamber C0 and the distributor chamber C1. In this way, the reset time of the floating ring is shortened from 0.5~1 seconds to 0.1~0.2 seconds, and the leakage under the sudden pressure impact is reduced by 80%, and the life of the wear-resistant layer is increased by 40%.

The furnace is also provided with other equipment, wherein the inner pipe P0 is provided on the fixed shell 101 of the distributor body 1 connecting the inner chamber C1, the narrow gap between the lower surface of the bottom plate 202 and the upper end of the fixed short pipe 6, and the inner chamber C1 is connected with the upper chamber 507 of the annular air duct II C3. Meanwhile, the fixed shell 101 of the distributor body 1, namely the intermediate air duct supply pipe P1. The upper plate of the fixed shell 101 has an air channel with the intermediate fixing cylinder 3 and connects with each other, the outer end of the air channel is connected with the intermediate air duct supply pipe P1, and the inner end is connected with the upper air duct I 407 of the annular air duct I C2, realizing the intermediate air duct supply pipe P1 into the annular air duct I C2, and blowing the middle floating ring 404.

In order to realize the redundancy control of nitrogen pressure, this scheme adopts "double gas supply + pressure feedback", that is, double air source (main air source + standby air source) are used for parallel gas supply in the cloth chamber P0 and intermediate air duct supply pipe P1, so as to ensure the continuity of gas supply and avoid seal failure caused by single point failure. At the same time, a piezoelectric pressure sensor is installed to adjust the nitrogen flow in real time to maintain the pressure fluctuation range of the inner chamber C1 and annular chamber C2/C3.

Specifically, the whole "nitrogen pressure redundancy control system" is composed of double gas sources (main / standby nitrogen tank or pipe network), pressure sensor, proportional control valve, PLC controller, pressure storage tank, quick switch valve, safety pressure relief valve, etc. The main gas source is used by the nitrogen pipe network connecting the plant and adjusted to the working pressure through the pressure reducing valve. The backup gas source is acted by the independent nitrogen tank group, and the gas supply pipeline is connected through the pressure reducing valve and the main gas source. The check valve is set between the two gas sources to prevent gas return. For the P0 pipeline (distributor inner chamber air supply), the connecting path is successively: the main circuit filter proportional regulating valve pressure sensor distributor inner chamber C1. For P1 pipeline (intermediate air supply), the connecting path is as follows: mainline proportional regulating valve pressure sensor ring air function C2/C3. The piezoelectric pressure sensor is installed downstream of the regulating valve of the P0 and P1 lines (near the distributor inlet), reads the sensor pressure value in real-time through the PLC and compares with the set value, and adjust the output signal through the PID algorithm. When the main air source pressure is lower than the set value or the pipeline is blocked, the PLC control solenoid valve switches to the backup gas source. Through redundant gas supply, intelligent pressure control and emergency protection, this scheme comprehensively improves the reliability of the nitrogen sealing system, and is especially suitable for long-term stable operation under blast furnace conditions.

For the convenience of disassembly, as optimization, the upper intermediate floating ring 404, the lower intermediate floating ring 403, the outer upper floating ring 504 and the outer lower floating ring 503 may be sectional structures, as shown in FIG. 5. That is, (floating ring) is divided into two halves in the diameter direction, connected by the bolt and (or) positioning pin, and realized by operating the local bolt and (or) positioning pin. The installation is achieved by removing a local groove structure with sufficient bolt and (or) pin connections from the upper or lower surface of the floating ring. Here the taical bolt is preferably divided into the floating ring, so that the thermal expansion coefficient difference between the bolt and the floating ring at high temperature. In addition, dovetail tenon can also be added in the section surface to avoid the radial dislocation caused by loose bolts. When setting the dovetail tenon, the floating ring section surface is designed as 30° dovetail tenon, the height of the tenon is 3mm, and the pretension force of Inconel bolt is 500 N·m to ensure the sealing of the section surface at high temperature.

As an optimization, it is also feasible to set the lubricant at the mating surface (S0, S1, S3, S4) of each floating ring, and the lubricant supply channel can be delivered to the mating surface of the air channel (P0, P1) in the upper and lower annular air function (C2, C3).

The specific embodiment of the nitrogen sealing structure of this embodiment is explained in detail below.
1) The sealing structure I 4 is provided at the annular air duct I C2 and is divided into upper and lower parts through the shaft shoulder I 405 with the lower floating ring wear resistance layer 409 in the upper floating ring and the wear resisting layer 410 in the upper air letter ring 40 and the lower air duct I 408; the sealing structure 5 is provided at the annular air duct II C3, similar to the sealing structure I4.
2) When the distributor works, IC2 and C3 have nitrogen from the intermediate air duct supply pipe P1 and the distributor inner chamber P0 respectively, and the nitrogen pressure is kept higher than the lumen pressure of the blast furnace.
3) Initial working stage of the distributor, The rotating cylinder will rotate, The upper intermediate floating ring 404 and (or) outer lower floating ring 503 may rotate with the rotating cylinder, Due to the machining size error, Circumferential jamming may occur after turning to a certain position, Put the floating ring in a relative fixed position, here, Movement is achieved by sliding relative to the lower intermediate floating ring 403 and the mating surface on the outer ring floating ring 504, Since the floating ring 404 on the middle and the floating ring 504 on the outer ring can also float freely axially, So it never stops stuck, And due to the nitrogen gas pressure and gravity, The upper and down rings remain in contact at all times.
4) If the outer ring cylinder of the floating ring 404 and 504 on the outer ring of the outer ring and the opposite wall (the inner wall of the inner ring cylinder 201) have the machining size accuracy and concentricity, and it has a small fit gap (preferably the fit gap is always maintained), so that the upper and lower floating rings will not have sliding wear in the work, relatively static on the rotating cylinder or partition ring, which can greatly improve the nitrogen sealing effect and reduce the nitrogen consumption.
5) If the upper and lower floating rings in the sealing structure I4 and the sealing structure 5 operate according to the above point 3) mode, with the work of the distributor, the coordination surface of the upper and lower floating rings can run in with each other, and the closer fit can be achieved, and the matching surface is more smooth.
6) If the upper and lower floating rings in the sealing structure I4 and sealing structure 5 operate in the mode of point 4) above, the circumferential jamming of the floating ring may be caused by long-term working thermal deformation, then the upper and lower floating rings will automatically operate in the way described at point 3) above, and then develop to the way described at point 5).
7) When working, when the C0 dust and air pressure in the inner cavity of the blast furnace lead to IC2 and annular air duct function C3, the dust can be prevented and the air pressure can be reduced through the labyrinth structure.
8) When the pressure of blast furnace 7 rises suddenly due to abnormal conditions, it is possible to lift the floating ring 404 in the middle and the floating ring 504 on the outer ring of the blast furnace. At this time, because the air pressure, the floating ring 404 in the middle and the floating ring 504 in the outer circle can quickly return to the original position due to gravity.

In general, the nitrogen sealing structure is divided into two functional regions in the overall structure, the labyrinth structure set on the lower position of the blast furnace can not only play the role of dust and dust, can also increase the gas pressure resistance damage in the furnace, provide favorable conditions for the upper floating ring seal; and the matching floating ring is set on the upper position of the distributor, they can maintain contact adaptively, through mutual run-in to achieve a closer union, and such a structure does not require high-precision manufacturing costs; by keeping the upper pressure above the blast furnace pressure, can ensure that the floating ring has a certain sealing pressure force, to achieve a better sealing effect. The floating ring structure and the labyrinth structure are protected by each other. The floating ring seal leakage is less, which reduces the gas flow situation of the cavity inside the blast furnace chamber and the distributor, thus reducing the wear of the gas on the labyrinth, and the labyrinth structure can reduce dust and pressure, which is protected as the front end of the floating ring seal.

Finally, the above embodiment is only used to illustrate the technical scheme of the invention, although the invention is detailed with reference to the better embodiment, the ordinary technicians shall understand that the technical scheme of the invention can be modified or replaced without departing from the purpose and scope of the technical scheme, which shall be covered in the scope of the claim of the invention.

## Claims

1. An improved blast furnace distributing device with a nitrogen sealing structure, comprising: a fixed shell, a rotary cylinder, and a central throat; the rotary cylinder is mounted on the inner upper part of the fixed shell by the rotary support and rotates around the rotary center; the upper part of the central throat is fixed with the position of the central ring hole above the fixed shell; the rotary cylinder is mainly composed of an inner ring cylinder, a cylinder bottom plate and an outer ring cylinder; the cylinder bottom plate is a circular disc; the cylindrical inner ring cylinder is arranged at the upper-end surface of the bottom plate and on the inner ring side of the bottom plate; the cylindrical outer ring cylinder is arranged at the lower-end surface of the bottom plate and on the outer ring side of the bottom plate; it is **characterized by**:
an annular joint formed between the central throat and the inner ring cylinder of the rotating cylinder can be removed and installed with an intermediate fixing cylinder;
an annular air duct I is formed between the inner ring cylinder and the intermediate fixing cylinder; the outer peripheral surface of the intermediate fixing cylinder is provided with a shaft shoulder I and an annular gap I is formed between the outer peripheral surface of the shaft shoulder I and the inner ring cylinder; the shaft shoulder I acts as an intermediate partition ring, dividing the annular air duct I into an upper air duct I and a lower air duct I which are interconnected through the annular gap I;
a lower intermediate floating ring is sleeved above the shaft shoulder I, and an upper intermediate floating ring is freely placed on top of the lower intermediate floating ring; the lower intermediate floating ring is provided with a lower mating surface I, while the upper intermediate floating ring correspondingly has an upper mating surface I that engages with the lower mating surface I; one of the mating surfaces I is a spherical surface with an R5mm radius, while the other is a conical surface with a 30 inclination angle, allowing the two mating surfaces I to form a line contact;
the lower air duct I under the shaft shoulder I is provided with an intermediate labyrinth ring;
a fixed short pipe is provided beneath the fixed shell, forming an annular air duct II between the outer ring cylinder placed inside the fixed short pipe and the fixed short pipe;
the outer peripheral surface of the outer ring cylinder is provided with a shaft shoulder II, and an annular gap II exists between the outer peripheral surface of the shaft shoulder II and the fixed short pipe; the shaft shoulder II serves as an outer partition ring to divide the annular air duct II into an upper air duct II and a lower air duct II, which are connected through the annular gap II;
an outer lower floating ring is sleeved above the shaft shoulder II, and an outer upper floating ring is freely placed on top of the outer lower floating ring; the outer lower floating ring is provided with a lower mating surface II, while the outer upper floating ring correspondingly has an upper mating surface II that engages with the lower mating surface II; one of the mating surfaces II is a spherical surface with an R5mm radius, while the other is a conical surface with a 30 inclination angle, allowing the two mating surfaces II to form a line contact;
the lower air duct II under the shaft shoulder II is provided with an outer labyrinth ring;
both the intermediate labyrinth ring and the outer labyrinth ring are configured as paired corrugated tubes and the tooth-shaped corrugation of the corrugated tubes is an asymmetrical corrugated structure, formed by increasing the wave crest arc radius R1 by 10% while decreasing the wave root arc radius R2 by 5%.

2. The improved blast furnace distributing device with a nitrogen sealing structure according to claim 1, wherein the intermediate fixing cylinder is fastened on a rotary support or central throat or fixed shell through the connector.

3. The improved blast furnace distributing device with a nitrogen sealing structure according to claim 1 wherein, in the annular air duct I, the annular width of the upper air duct I is greater than that of the lower air duct I, and the annular width of the lower air duct I is greater than that of the annular gap I; in the annular air duct II, the annular width of the upper air duct II is greater than that of the lower air duct II, and the annular width of the lower air duct II is greater than that of the annular gap II.

4. The improved blast furnace distributing device with a nitrogen sealing structure according to claim 1, wherein a thermal expansion gap of 0.5 to 1 mm is reserved between the wave crest and wave root of the corrugated tubes.

5. The improved blast furnace distributing device with a nitrogen sealing structure according to claim 4, wherein the inner wall of the corrugated tubes is coated with Al2O3-TiC ceramic coating.

6. The improved blast furnace distributing device with a nitrogen sealing structure according to claim 4, wherein 4 to 6 nozzles are uniformly arranged to the bottom circumference of the intermediate fixing cylinder, with their injection direction aimed at the corrugation gap of the intermediate labyrinth ring; 4 to 6 nozzles are uniformly arranged circumferentially on the inner wall of the fixed short pipe, with their injection direction aimed at the corrugation gaps of the outer labyrinth ring; the nozzle is electrically connected to the solenoid valve controlling the nitrogen injection and the timer.

7. The improved blast furnace distributing device with a nitrogen sealing structure according to claim 1, wherein an elastic spacer is added between the lower intermediate floating ring and the shaft shoulder I, and between the outer lower floating ring and the shaft shoulder II; the elastic spacer is a metal corrugated pad.

8. The improved blast furnace distributing device with a nitrogen sealing structure according to claim 1, wherein an intermediate air duct supply pipe is connected to the annular air duct I to provide blowing pressure to the intermediate upper floating ring; a gap is left between the fixed short pipe and a cylinder bottom plate, allowing the upper air duct II within the annular air duct II to communicate with the inner chamber of the distributor; the inner chamber of the distributor is connected to a distributor inner chamber supply pipe.

9. The improved blast furnace distributing device with a nitrogen sealing structure according to claim 1, wherein a permanent magnet resistant to high temperature is embedded in the upper intermediate floating ring and the outer upper floating ring; an electromagnetic coil set fits with the permanent magnet on the fixed shell and the intermediate fixing cylinder, and also includes a pressure sensing and control system to monitor the blast furnace pressure in real-time and trigger the electrification of the electromagnetic coil, and a power supply and circuit module to provide pulse current and control the direction of magnetic force.

10. The improved blast furnace distributing device with a nitrogen sealing structure according to claim 1, wherein the supply pipe P0 of the inner chamber and the intermediate air duct supply pipe P1 provide parallel air sources.

## Amended claims

### Amended claims in accordance with Rule 137(2) EPC.

1. An improved blast furnace distributing device with a nitrogen sealing structure, comprising:
a fixed shell (101), a rotary cylinder (2) and a central throat (103); the rotary cylinder is mounted on the inner upper part of the fixed shell by a rotary support (102) and rotates around the rotary center; the upper part of the central throat is fixed with the position of the central ring hole above the fixed shell; the rotary cylinder is mainly composed of an inner ring cylinder (201), a cylinder bottom plate (202) and an outer ring cylinder (203); the cylinder bottom plate is a circular disc; the cylindrical inner ring cylinder is arranged at the upper-end surface of the bottom plate and on the inner ring side of the bottom plate; the cylindrical outer ring cylinder is arranged at the lower-end surface of the bottom plate and on the outer ring side of the bottom plate;
an annular joint formed between the central throat and the inner ring cylinder of the rotary cylinder is removably installed with an intermediate fixing cylinder (3);
an annular air duct I (C2) is formed between the inner ring cylinder and the intermediate fixing cylinder; the outer peripheral surface of the intermediate fixing cylinder is provided with a shaft shoulder I (405) and an annular gap I (406) is formed between the outer peripheral surface of the shaft shoulder I and the inner ring cylinder; the shaft shoulder I acts as an intermediate partition ring, dividing the annular air duct I into an upper air duct I (407) and a lower air duct I (408) which are interconnected through the annular gap I;
a lower intermediate floating ring (403) is sleeved above the shaft shoulder I, and an upper intermediate floating ring (404) is freely placed on top of the lower intermediate floating ring; the lower intermediate floating ring is provided with a lower mating surface I (S0), while the upper intermediate floating ring correspondingly has an upper mating surface I (S1) that engages with the lower mating surface I, so that the upper and lower mating surfaces I form a line contact;
the lower air duct I under the shaft shoulder I is provided with an intermediate labyrinth ring (401, 402);
a fixed short pipe (6) is provided beneath the fixed shell, forming an annular air duct II (C3) between the outer ring cylinder placed inside the fixed short pipe and the fixed short pipe;
the outer peripheral surface of the outer ring cylinder is provided with a shaft shoulder II (505), and an annular gap II (506) exists between the outer peripheral surface of the shaft shoulder II and the fixed short pipe; the shaft shoulder II serves as an outer partition ring to divide the annular air duct II into an upper air duct II (507) and a lower air duct II (508), which are connected through the annular gap II;
an outer lower floating ring (503) is sleeved above the shaft shoulder II, and an outer upper floating ring (504) is freely placed on top of the outer lower floating ring; the outer lower floating ring is provided with a lower mating surface II (S3), while the outer upper floating ring correspondingly has an upper mating surface II (S4) that engages with the lower mating surface II, so that the upper and lower mating surfaces II form a line contact;
the lower air duct II under the shaft shoulder II is provided with an outer labyrinth ring (501, 502);
both the intermediate labyrinth ring and the outer labyrinth ring are configured as paired corrugated tubes,
**characterized in that**:
one of the mating surfaces I is a convex toroidal surface having an axial cross-section in the form of a circular arc with a radius R of 5 mm, while the other is a conical surface with an inclination angle of 30°;
one of the mating surfaces II is a convex toroidal surface having an axial cross-section in the form of a circular arc with a radius R of 5 mm, while the other is a conical surface with an inclination angle of 30°;
the tooth-shaped corrugation of the corrugated tubes of both the intermediate labyrinth ring and the outer labyrinth ring is an asymmetrical corrugated structure, formed by increasing the wave crest arc radius R1 by 10% while decreasing the wave root arc radius R2 by 5%, relative to a symmetrical corrugated structure in which the wave crest arc radius R1 and the wave root arc radius R2 are equal.

2. The improved blast furnace distributing device with a nitrogen sealing structure according to claim 1, wherein the intermediate fixing cylinder (3) is fastened on the rotary support (102) or the central throat (103) or the fixed shell (101) through a connector.

3. The improved blast furnace distributing device with a nitrogen sealing structure according to claim 1, wherein, in the annular air duct I (C2), the annular width of the upper air duct I (407) is greater than that of the lower air duct I (408), and the annular width of the lower air duct I is greater than that of the annular gap I (406); in the annular air duct II (C3), the annular width of the upper air duct II (507) is greater than that of the lower air duct II (508), and the annular width of the lower air duct II is greater than that of the annular gap II (506).

4. The improved blast furnace distributing device with a nitrogen sealing structure according to claim 1, wherein a thermal expansion gap of 0.5 to 1 mm is reserved between the wave crest and the wave root of the corrugated tubes of the intermediate labyrinth ring (401, 402) and of the outer labyrinth ring (501, 502).

5. The improved blast furnace distributing device with a nitrogen sealing structure according to claim 4, wherein the inner wall of the corrugated tubes of the intermediate labyrinth ring (401, 402) and of the outer labyrinth ring (501, 502) is coated with an Al2O3-TiC ceramic coating.

6. The improved blast furnace distributing device with a nitrogen sealing structure according to claim 4, wherein 4 to 6 nozzles are uniformly arranged at the bottom circumference of the intermediate fixing cylinder (3), with their injection direction aimed at the corrugation gaps of the intermediate labyrinth ring (401, 402); 4 to 6 nozzles are uniformly arranged circumferentially on the inner wall of the fixed short pipe (6), with their injection direction aimed at the corrugation gaps of the outer labyrinth ring (501, 502); the nozzles are electrically connected to a solenoid valve for controlling the nitrogen injection and to a timer.

7. The improved blast furnace distributing device with a nitrogen sealing structure according to claim 1, wherein an elastic spacer is added between the lower intermediate floating ring (403) and the shaft shoulder I (405), and between the outer lower floating ring (503) and the shaft shoulder II (505); the elastic spacer is a metal corrugated pad.

8. The improved blast furnace distributing device with a nitrogen sealing structure according to claim 1, wherein an intermediate air duct supply pipe (P1) is connected to the annular air duct I (C2) to provide blowing pressure to the upper intermediate floating ring (404); a gap is left between the fixed short pipe (6) and the cylinder bottom plate (202), allowing the upper air duct II (507) within the annular air duct II (C3) to communicate with the inner chamber (C1) of the distributor; the inner chamber of the distributor is connected to a distributor inner chamber supply pipe (P0).

9. The improved blast furnace distributing device with a nitrogen sealing structure according to claim 1, wherein a permanent magnet resistant to high temperature is embedded in the upper intermediate floating ring (404) and in the outer upper floating ring (504); an electromagnetic coil set is provided on the fixed shell (101) and on the intermediate fixing cylinder (3) so as to fit with the permanent magnet; the distributing device further comprises a pressure sensing and control system configured to monitor the blast furnace pressure in real-time and to trigger the electrification of the electromagnetic coil set, and a power supply and circuit module configured to provide pulse current and to control the direction of magnetic force.

10. The improved blast furnace distributing device with a nitrogen sealing structure according to claim 8, wherein the distributor inner chamber supply pipe (P0) and the intermediate air duct supply pipe (P1) provide parallel air sources.
